# EUROPÄISCHE PATENTANMELDUNG

(11) **EP 0 650 756 A1**
(43) Veröffentlichungstag der Anmeldung: **03.05.1995**
(21) Anmeldenummer: 94116652.2
(22) Anmeldetag: 21.10.1994
(51) Int. Cl.: B01D 46/06, B01D 46/04

(54) **Stützkäfig für Glasfaser-Schlauchfilter zur Gasfiltration**

(30) Priorität: 27.10.1993 DE 9316420 U
(71) Anmelder: W.L. GORE & ASSOCIATES, D-85640 Putzbrunn (DE)
(72) Erfinder: Feldt, Klas-Göran, S-30270 Halmstad (SE)
(74) Vertreter: Klunker . Schmitt-Nilson . Hirsch

(57) **Zusammenfassung**

Die Erfindung/Neuerung betrifft einen Stützkäfig für Glasfaser-Schlauchfilter zur Gasfiltration, wobei sich zwischen einer geschlossenen Basisplatte und einer Deckelplatte mit mittlerer Auslaßöffnung des Stützkäfigs eine vorgegebene Anzahl von langgestreckten, im wesentlichen zueinander parallelen Stützelementen erstreckt, die von einem schlauchartig ausgebildeten Filtermedium aus einem Glasfasergewebe oder Glasfaservlies umgeben sind und dieses abstützen, dadurch gekennzeichnet, daß die Stützelemente Rohre sind, deren Krümmungsradien so gewählt sind, daß auf Rohrmantelflächen jeweils flächige Abstützbereiche ausreichender Größe für das auf den Stützkäfig aufgebrachte Filtermedium gebildet sind.

## Beschreibung

Die Erfindung/Neuerung betrifft einen Stützkäfig für Glasfaser-Schlauchfilter zur Gasfiltration, wobei sich zwischen einer geschlossenen Basisplatte und einer Deckelplatte mit mittlerer Auslaßöffnung des Stützkäfigs eine vorgegebene Anzahl von langgestreckten, im wesentlichen zueinander parallelen Stützelementen erstreckt, die von einem schlauchartig ausgebildeten Filtermedium aus einem Glasfaser-Gewebe oder -Vlies umgeben sind und dieses abstützen.

Es ist bekannt, bei industriellen Entstaubungsanlagen sogenannte Schlauchfilter oder Filterschläuche einzusetzen, die im wesentlichen aus einem schlauchartigen Filtermedium bestehen, welches um einen Stützkorb herum gelegt ist, welcher dem resultierenden Schlauchfilter die notwendige mechanische Stabilität verleiht. Derartige Schauchfilter besitzen beispielsweise eine Länge von einem Meter und einen Durchmesser im Bereich zwischen 150 umd 200 mm.

Es ist ferner bekannt, zum Zwecke der Gasfiltration, insbesondere der Heißgas-Filtration, als Filtermedium Glasfasergewebe zu verwenden, beispielsweise in Form einer Gore-Tex® -Membran auf einem Glasfasergewebe als Stützträger.

Der zur Bildung eines derartigen Schlauchfilters erforderliche Stützkäfig oder Stützkorb besteht im wesentlichen aus einer Anzahl von drahtförmigen Stützelementen mit einem Durchmesser von ca. 3 bis 4 mm, welche sich zwischen einer Basisplatte und einer Deckelplatte des resultierenden Schlauchfilters erstrecken. Bei den verwendeten Glasfasergeweben handelt es sich um Materialien, die in mechanischer Hinsicht außerordentlich empfindlich sind, so daß zur Abstützung solcher Glasfasergewebe eine große Anzahl von Drähten eingesetzt werden muß, da sonst die Gefahr besteht, daß dieses Material aufgrund seiner verhältnismäßig geringen Biegewechselfestigkeit leicht bricht, insbesondere dann, wenn die Abreinigung des Schlauchfilters mit Hilfe von Druckluft erfolgt. Bei der Druckluftabreinigung von solchen Schlauchfiltern wird dieses mit einem pulsierenden Luftstrom beaufschlagt, und zwar von der Innenseite des Schlauchfilters her, so daß nach Gebrauch eines solchen Schlauchfilters die auf dessen Außenoberfläche abgelagerte Staubschicht mit Hilfe der Druckluft-Impulse mit erhöhter Geschwindigkeit herausgeschleudert wird (Pulse-Jet"-Abreinigung).

Infolge derartiger Druckluftabreinigungen der Schlauchfilter sind die Filtermedien verhältnismäßig hohen mechanischen Belastungen ausgesetzt, insbesondere müssen sie dazu in der Lage sein, die bei der Abreinigung auftretenden Bewegungen mitzumachen, ferner ist es erforderlich, daß sie durch die hierdurch bedingten Scheuerbewegungen an den Drähten des Stützkorbes oder Stützkäfigs nicht unverhältnismäßig stark abgenutzt werden.

Im Falle von Glasfaser-Schlauchfiltern hat es sich allerdings herausgestellt, daß das Glasfasergewebe oder -Vlies aufgrund der Scheuerbewegungen, die an dem aus Drähten bestehenden Stutzkäfig auftreten, in verstärktem Maße abgenutzt wird, mit der Folge, daß die Lebensdauer derartiger Glasfaser-Schlauchfilter relativ gering ist.

Mit anderen Worten, bei der Verwendung von Glasfaser-Schlauchfiltern in industriellen Entstaubungsanlagen, beispielsweise zum Zwecke der Filtration von Heißgasen, ist es bisher erforderlich, derartige Schlauchfilter in relativ kurzen Zeitabständen wieder auszutauschen, da sie aufgrund der regelmäßig erforderlichen Abreinigungsvorgänge mittels Druckluft bei einer verhältnismäßig kurzen Einsatzdauer nicht mehr brauchbar sind.

Derartige Probleme und Schwierigkeiten sind in erster Linie durch die bisher bekannte Konstruktion von Stützkäfigen mit Drähten zur Bildung von Stützelementen bedingt.

Der vorliegenden Erfindung/Neuerung liegt daher die Aufgabe zugrunde, eine verbesserte Konstruktion eines Stützkäfigs für Glasfaser-Schlauchfilter zur Gasfiltration anzugeben, mit dem Ziel, daß erstens die Abreinigungsfähigkeit solcher Glasfaser-Schlauchfilter bei der Pulse-Jet-Abreinigung wesentlich verbessert wird, und daß zweitens der verhältnismäßig geringen Biegewechselfestigkeit von Glasfasergeweben Rechnung getragen wird, daß drittens Abnutzungserscheinungen durch Scheuerbewegungen an dem Stützkäfig wesentlich vermindert werden, so daß letztendlich die Lebensdauer der resultierenden Glasfaser-Schlauchfilter wesentlich erhöht werden kann.

Ausgehend von einem Stützkäfig der eingangs erläuterten Art wird diese Aufgabe gemäß der Erfindung/Neuerung dadurch gelöst, daß die Stützelemente Rohre sind, deren Krümmungsradien so gewählt sind, daß auf Rohrmantelflächen jeweils flächige Abstützbereiche ausreichender Größe für das auf den Stützkäfig aufgebrachte Filtermedium gebildet sind. Das Filtermedium besteht, genauer gesagt, aus einem Glasfasergewebe oder -Vlies, das mit einer Membran, z.B. GORE-TEX® -Membran beschichtet oder laminiert ist.

Aufgrund des Stützkäfigs gemäß vorliegender Erfindung/Neuerung werden wesentlich günstigere Abstützbedingungen für das Filtermedium geschaffen, insbesondere ist es möglich, daß, verglichen mit aus Drähten aufgebauten Stützkörben, die Abstände zwischen jeweils am Stützkäfigumfang aufeinanderfolgenden Rohren größer gemacht werden können, wodurch dem schlauchförmig um den Stützkäfig herum liegenden Glasfasergewebe oder -Vlies im Zuge der Pulse-Jet-Abreinigung mittels Druckluft ein wesentlich verbessertes Bewegungsverhalten ermöglicht wird, und zwar dadurch, daß die Durchbiegungsfähigkeit in den Bereichen zwischen den an Stützkäfigumfang aufeinanderfolgenden Stützrohren größer gemacht werden kann, so daß das Material nicht so stark in Bewegung versetzt wird.

Im übrigen können auch die resultierenden Schlauchfilter einen größeren Durchmesser aufweisen, verglichen mit den bisher bekannten Schlauchfiltern mit aus Drähten gebildeten Stützkäfigen.

Schlauchfilter mit größeren Durchmessern besitzen den Vorteil, daß ein verbessertes Biegeverhalten des Filtermediums erreicht und hierdurch eine bessere und wirksamere Abreinigungsfähigkeit erzielt werden kann. Bei der Druckluftabreinigung auftretende geringere Druckabfälle und/oder ein ausgedehnterer Reinigungs-Zyklus führen automatisch zu einer erhöhten Lebensdauer des resultierenden Schlauchfilters.

Schließlich wird durch die flächigen Abstützbereiche auf den Rohrmantelflächen gewährleistet, daß das Filtermedium infolge wesentlich reduzierter Scheuerbewegungen auf den Stützelementen einer entsprechend verringerten Abnutzung unterworfen ist.

Gemäß weiterer vorteilhafter Ausgestaltungen der Erfindung/Neuerung ist vorgesehen, daß in der Längsrichtung des Stützkäfigs wenigstens zwei aufeinanderfolgende Gruppen aus jeweils einer gleichen Anzahl von Rohren mit jeweils gleichen zylindrischen Querschnitten vorgesehen sind, wobei die Rohre einer jeden Rohrgruppe gleichmäßige gegenseitige Winkelabstände voneinander aufweisen, derart, daß die Rohre der ersten Rohrgruppe mit den Rohren der zweiten Rohrgruppe an den jeweiligen, einander zugeordneten Rohr-Endabschnitten teleskopartig zusammensteckbar sind.

Aufgrund dieser Weiterbildung lassen sich zwei- oder mehrstufige Stützkäfige bilden, ohne daß die Verbindungsstellen der in Längsrichtung des Stützkäfigs aufeinanderfolgenden Rohrgruppen zu irgendeiner Beeinträchtigung des herumgelegten Glasfasergewebes oder -Vliesses führen könnten.

Durch die teleskopartige Zusammensteckbarkeit ergeben sich praktisch nicht sichtbare Verbindungsstellen, welche darüber hinaus eine ausgezeichnete Stabilität besitzen.

Weitere vorteilhafte Ausgestaltungen der Erfindung/Neuerung ergeben sich aus den weiteren Unteransprüchen.

Die vorliegende Erfindung/Neuerung wird nunmehr im Rahmen eines Ausführungsbeispieles näher erläutert, wobei auf die beigefügten Zeichnungen Bezug genommen wird. In diesen zeigen:
- **Fig. 1**: schematisch einen Querschnitt durch ein vollständiges Glasfaser-Schlauchfilter mit innen angeordnetem Stützkäfig.
- **Fig. 2**: schematisch eine perspektivische Ansicht eines kompletten Stützkäfigs und
- **Fig. 3**: eine Seitenansicht von zwei teleskopartig zusammengesteckten Rohren, welche zu entsprechenden Rohrgruppen gehören, die in der Längsrichtung des Stützkäfigs aufeinanderfolgend angeordnet sind.

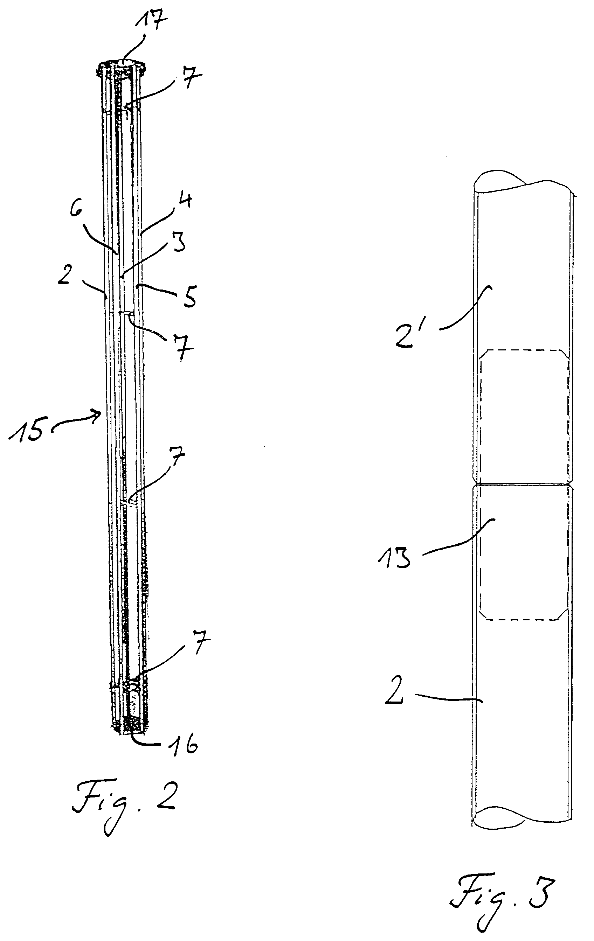

Ein aus Fig. 2 ersichtlicher Stützkäfig 15 für ein in Fig. 2 nicht dargestelltes Glasfaser-Schlauchfilter besteht im wesentlichen aus einer geschlossenen Basisplatte 16 und einer Deckelplatte 17 mit einer mittleren Auslaßöffnung, zwischen denen sich als Stützelemente fünf Rohre 2, 3, 4, 5 und 6 erstrecken, deren einen Enden mit der Basisplatte und deren anderen Enden mit der Deckelplatte befestigt sind.

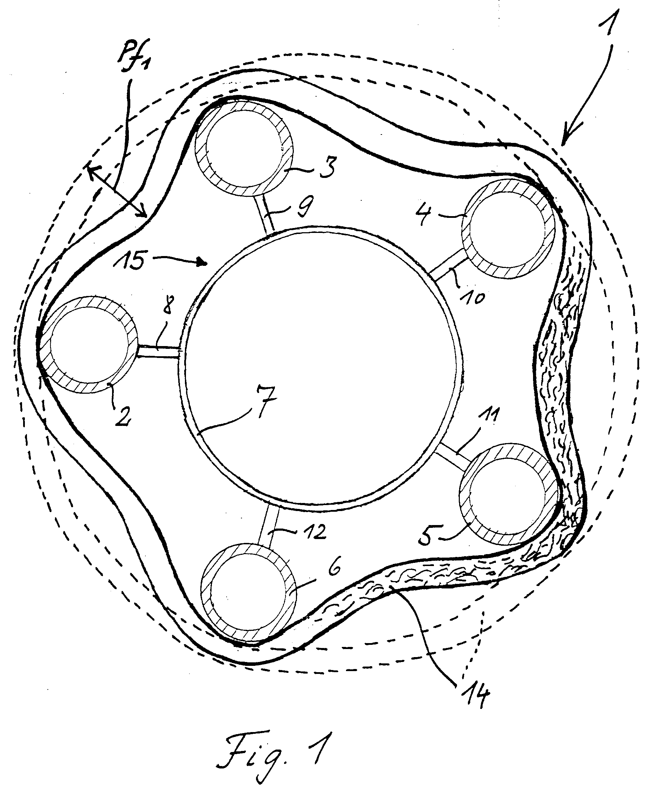

Fig. 1 zeigt einen schematischen Querschnitt durch ein komplettes Glasfaser-Schlauchfilter 1. Hieraus ist ersichtlich, daß um den Stützkäfig ein Glasfasergewebe 14 herumgelegt ist, welches das Filtermedium des Schlauchfilters 1 bildet.

Die Krümmungsradien der die Stützelemente für dieses Glasfasergewebe 14 bildenden Rohre 2, 3, 4, 5 und 6 sind so gewählt, daß auf den entsprechenden Rohrmantelflächen jeweils flächige Abstützbereiche ausreichender Größe für das Glasfasergewebe 14 gebildet sind.

Flächige Abstützbereiche "ausreichender Größe" bedeutet, daß die Abstützflächen für das Glasfasergewebe 14 so groß sind, daß Scheuerbewegungen des Glasfasergewebes 14 auf dem Stützkäfig 15, welche zu einem verhältnismäßig raschen Verschleiß des Glasfasergewebes 14 führen könnten, auf ein Minimum herabgesetzt oder vollständig vermieden werden können.

Der Durchmesser der insbesondere aus Stahl bestehenden Rohre 2, 3, 4, 5 und 6 beträgt beispielsweise 19 mm und ihre Wandstärke z.B. 1 mm. Wie die Fig. 1 und 2 ferner zeigen, sind die Rohre 2, 3, 4, 5 und 6 durch eine entsprechende Anzahl von stangenförmigen Verbindungsstücken 8,9, 10, 11 und 12 mit einer ringförmigen Halterung 7 verbunden, wobei sich diese Verbindungsstangen jeweils radial von der ringförmigen Halterung 7 ausgehend zu dem Rohrmantel eines jeden der Rohre 2 ,3, 4, 5 und 6 hin erstrecken. Die Stärke dieser Verbindungsstücke 8 - 12 beträgt z.B. jeweils 4 mm.

Wie sich aus Fig. 2 ersehen läßt, sind in dem Bereich zwischen der Basisplatte 16 und der Deckelplatte 17 in der Axialrichtung aufeinanderfolgend mehrere solcher ringförmigen Halterungen 7 vorhanden, im vorliegenden Ausführungsbeispiel insgesamt vier Halterungen 7.

In dem in den Fig. 1 und 2 gezeigten Ausführungsbeispiel weist der Stützkäfig 15 insgesamt fünf Rohre 2 - 6 als Stützelemente auf, es kann jedoch vorgesehen sein, daß in Abhängigkeit von dem Gesamtdurchmesser des resultierenden Stützkäfigs Rohre in der Anzahl zwischen vier und zehn vorhanden sind, wobei eine bevorzugte Anzahl fünf oder acht Rohre sind.

Darüber hinaus kann auch noch vorgesehen sein, daß in der Längsrichtung des Stützkäfigs 15 gemäß Fig. 2 wenigstens zwei aufeinanderfolgende Gruppen beispielsweise aus je fünf Rohren mit jeweils gleichen zylindrischen Querschnitten vorgesehen sind, wobei die Rohre 2, 3, 4, 5 und 6 einer jeden Rohrgruppe gleichmäßige gegenseitige Winkelabstände voneinander aufweisen, derart, daß die Rohre der ersten Rohrgruppe mit den Rohren der zweiten Rohrgruppe an den jeweiligen einander zugeordneten Rohr-Endabschnitten teleskopartig zusammengesteckt werden können.

Aufgrund dieser Konstruktionsweise kann beispielsweise ein zwei- oder mehrstufiger Stützkäfig realisiert werden, wobei die Verbindungsstellen zwischen jeweils zwei aufeinanderfolgenden Rohrgruppen infolge deren teleskopartigen Zusammensteckbarkeit praktisch mühelos erhalten werden können. An diesen Verbindungsstellen gehen praktisch die Rohre der einen Rohrgruppe unmittelbar in die Rohre der darauffolgenden Rohrgruppe über, wobei keinerlei störenden Oberflächenstellen oder Bereiche entstehen, welche wiederum zu einer Beeinträchtigung des auf den Stützkäfig 15 aufgebrachten Glasfasergewebes 14 führen könnten.

Dies zeigt deutlich die Fig. 3, aus welcher sich ersehen läßt, daß ein Rohr 2 einer ersten Rohrgruppe an seinem einen Ende mit einem zylindrischen Einsatzteil 13 mit einem etwas verringerten Durchmesser versehen ist, wobei dieses Einsatzteil 13 zum teleskopartigen Zusammenstecken mit dem sich anschließenden Rohr 2' der zweiten Rohrgruppe dient.

Entsprechende Einsatzteile 13 sind selbstverständlich für alle Rohre einer jeden Rohrgruppe vorgesehen.

Infolgedessen könnte beispielsweise der in Fig. 2 dargestellte Stützkäfig aus einer ersten Rohrgruppe bestehen, welche mit der Basisplatte 16 verbunden ist, sowie aus einer zweiten Rohrgruppe, die mit der Deckelplatte 17 verbunden ist, während beide Rohrgruppen an ihren einander zugeordneten Endabschnitten miteinander teleskopartig zusammengesteckt sind.

In der Fig. 1 ist durch den Doppelpfeil Pf₁ noch angedeutet, wie sich das Glasfasergewebe 14 bzw. der aus diesem bestehende Schlauch bei der Abreinigung mittels eines pulsierenden Luftstromes bewegt, mit welchem der Schlauch von der Innenseite des Schlauchfilters 1 her beaufschlagt wird.

Durch diese Art der Abreinigung wird der Staub mit erhöhter Geschwindigkeit von der Oberfläche des Schlauchfilters 1 herausgeschleudert.

## Patentansprüche

1. Stützkäfig für Glasfaser-Schlauchfilter zur Gasfiltration, wobei sich zwischen einer geschlossenen Basisplatte und einer Deckelplatte mit mittlerer Auslaßöffnung des Stützkäfigs eine vorgegebene Anzahl von langgestreckten, im wesentlichen zueinander parallelen Stützelementen erstreckt, die von einem schlauchartig ausgebildeten Filtermedium aus einem Glasfasergewebe oder Glasfaservlies umgeben sind und dieses abstützen, **dadurch gekennzeichnet,** daß die Stützelemente Rohre (2, 3, 4, 5, 6) sind, deren Krümmungsradien so gewählt sind, daß auf Rohrmantelflächen jeweils flächige Abstützbereiche ausreichender Größe für das auf den Stützkäfig aufgebrachte Filtermedium (14) gebildet sind.

2. Stützkäfig nach Anspruch 1, **dadurch gekennzeichnet,** daß in der Längsrichtung des Stützkäfigs wenigstens zwei aufeinanderfolgende Gruppen aus jeweils einer gleichen Anzahl von Rohren mit jeweils gleichen zylindrischen Querschnitten vorgesehen sind, wobei die Rohre einer jeden Rohrgruppe gleichmäßige gegenseitige Winkelabstände voneinander aufweisen, derart, daß die Rohre (2) der ersten Rohrgruppe mit den Rohren (2') der zweiten Rohrgruppe an den jeweiligen einander zugeordneten Rohr-Endabschnitten teleskopartig zusammensteckbar sind.

3. Stützkäfig nach Anspruch 2, **dadurch gekennzeichnet,** daß die erste Rohrgruppe mit der Basisplatte (16) und die zweite Rohrgruppe bzw. die letzte Rohrgruppe mit der Deckelplatte (17) verbunden sind.

4. Stützkäfig nach einem der vorhergehenden Ansprüche, **dadurch gekennzeichnet,** daß zwischen Basisplatte (16) und Deckelplatte (17) wenigstens eine ringförmige Halterung (7) vorgesehen ist, die mit den Rohren (2, 3, 4, 5, 6) verbunden ist.

5. Stützkäfig nach Anspruch 4, **dadurch gekennzeichnet,** daß die Halterung (7) mit den Rohren (2, 3, 4, 5, 6) durch stangenförmige Verbindungsstücke (8, 9, 10, 11, 12) verbunden ist, die sich jeweils radial von der Halterung (7) ausgehend zu dem Rohrmantel eines Rohres hin erstrecken.

6. Stützkäfig nach einem der Ansprüche 2 bis 5, **dadurch gekennzeichnet,** daß die Rohre jeweils einer Rohrgruppe an ihren einen Enden jeweils mit einem zyllndrischen Einsatzteil (13) mit einem etwas reduzierten Durchmesser versehen sind, das zum teleskopartigen Zusammenstecken mit den Rohren der jeweils darauffolgenden Rohrgruppe dient.
